Europäisches Patentamt

European Patent Office

Office européen des brevets

(19)

(11) Numéro de publication : **0 309 846 B1**

## (12) FASCICULE DE BREVET EUROPEEN

(45) Date de publication du fascicule du brevet :
**22.05.91 Bulletin 91/21**

(51) Int. Cl.⁵ : **F28D 21/00, F23L 15/04**

(21) Numéro de dépôt : **88115312.6**

(22) Date de dépôt : **19.09.88**

(54) **Echangeur vertical isotherme à virole cylindrique pour le réchauffage d'air sous pression en contre-courant de fumées.**

(30) Priorité : **28.09.87 FR 8713379**

(43) Date de publication de la demande :
**05.04.89 Bulletin 89/14**

(45) Mention de la délivrance du brevet :
**22.05.91 Bulletin 91/21**

(84) Etats contractants désignés :
**AT BE DE ES FR GB IT NL**

(56) Documents cités :
**DE-A- 3 421 746**
**DE-C- 402 945**
**FR-A- 892 762**
**FR-A- 1 482 444**

(56) Documents cités :
**FR-A- 2 262 273**
**FR-A- 2 598 496**
**US-A- 1 886 670**
**US-A- 2 838 287**

(73) Titulaire : **STEIN INDUSTRIE Société Anonyme dite:**
**19-21, avenue Morane Saulnier**
**F-78140 Vélizy Villacoublay (FR)**

(72) Inventeur : **Aivaz, Guy**
**93 Les Cottages Cernay La Ville**
**F-78720 Dampierre (FR)**

(74) Mandataire : **Weinmiller, Jürgen et al**
**Lennéstrasse 9 Postfach 24**
**W-8133 Feldafing (DE)**

EP 0 309 846 B1

Jouve, 18, rue Saint-Denis, 75001 PARIS

## Description

La présente invention concerne un échangeur vertical isotherme à virole cylindrique pour le réchauffage d'air sous pression en contre-courant de fumées circulant dans des faisceaux tubulaires verticaux, répartis régulièrement entre au moins une couronne centrale et au moins une couronne périphérique, comprenant

    a) une tubulure d'admission d'un flux d'air primaire à l'extrémité inférieure de l'échangeur dans sa zone axiale, des chicanes contraignant le flux d'air primaire à circuler radialement alternativement de façon centrifuge et de façon centripète sensiblement perpendiculairement aux faisceaux tubulaires de la couronne axiale, et une tubulure d'évacuation d'un flux d'air primaire réchauffé dans la zone axiale de l'extrémité supérieure de l'échangeur,

    b) des plaques de fond inférieure et supérieure fixées à la virole,

    c) au moins une ouverture d'admission d'un flux d'air secondaire dans la zone périphérique de l'échangeur, des chicanes contraignant le flux d'air secondaire à circuler radialement alternativement de façon centrifuge et de façon centripète, et au moins une ouverture d'évacuation du flux d'air secondaire réchauffé dans la zone périphérique de l'échangeur,

    d) une gaine d'admission de fumées chaudes dans le haut des faisceaux tubulaires, et une gaine d'évacuation de fumées refroidies du bas des faisceaux tubulaires.

Le document FR-A-2598496 de la demanderesse concerne notamment un échangeur vertical de réchauffage d'air sous pression en contre-courant de fumées circulant dans des faisceaux tubulaires, et contenu dans une virole cylindrique, dans lequel les faisceaux tubulaires sont répartis régulièrement en couronne entre deux zones axiales et deux zones périphériques de circulation de l'air et séparés par des chicanes radiales, ces chicanes sont reliées aux plaques tubulaires supérieures de support des faisceaux et transmettent le poids de ceux-ci à des appuis périphériques entourant la partie inférieure de l'échangeur, et des joints de dilatation sont disposés entre la partie inférieure des viroles cylindriques et les plaques tubulaires inférieures des faisceaux.

Un tel échangeur ne nécessite pas d'adjonction de renforts importants des parois pour résister à la pression interne, se prête à une préfabrication en usine et n'implique pas d'opérations de dudgeonnage de tubes dans des plaques tubulaires sur chantier. Toutefois, la température de l'air réchauffé y croît de façon très importante de l'extrémité inférieure de l'échangeur à son extrémité supérieure (par exemple couramment de 50°C à 260°C), de sorte que sa dilatation radiale dans le haut est très supérieure à cette dilatation dans le bas, et que sa virole tend à prendre une forme trapézoïdale.

La présente invention a pour but de procurer un échangeur dont la virole ne soit exposée qu'à une dilatation radiale sensiblement constante sur toute sa hauteur, et relativement faible.

L'échangeur selon l'invention est caractérisé en ce que ses faisceaux tubulaires de la couronne centrale et de la couronne périphérique sont contenus dans des conduits calorifugés internes et externes fixés aux plaques de fond inférieure et supérieure, en ce que des ouvertures d'admission du flux d'air secondaire dans l'échangeur sont disposées dans la partie supérieure de celui-ci, des ouvertures d'évacuation de ce flux de l'échangeur dans cette partie supérieure, entre les ouvertures d'admission, au même niveau et des ouvertures d'admission de ce flux dans les conduits externes dans leur extrémité inférieure, en ce que les conduits calorifugés externes contenant les faisceaux tubulaires de la couronne périphérique la plus externe sont séparés de la virole par une zone libre en communication avec l'ouverture d'admission du flux d'air secondaire, en ce que l'ensemble de l'échangeur est supporté par une structure fixe disposée sous son fond inférieur, et en ce que ses faisceaux tubulaires sont fixés à la plaque de fond inférieure de l'échangeur et reliés à sa plaque de fond supérieure par des joints de dilatation.

Il répond en outre de préférence à au moins l'une des caractéristiques suivantes :

    – Ses faisceaux tubulaires sont de section droite rectangulaire, et ceux formant la couronne périphérique ont leur petit côté orienté radialement (ce qui permet de réduire notablement son encombrement).

    – Sa virole cylindrique n'est pas calorifugée.

    – Des tôles ondulées sont disposées autour des faisceaux tubulaires et reliées à une extrémité aux joints de dilatation de ces faisceaux et à l'autre extrémité au fond supérieur de l'échangeur, de manière à permettre la dilatation radiale différentielle des faisceaux.

    – Chaque faisceau tubulaire est muni de supports indépendants.

    – Le calorifugeage des conduits entourant les faisceaux tubulaires est interne.

    – Sa gaine d'admission des fumées est calorifugée intérieurement.

    – Sa gaine d'évacuation des fumées est calorifugée intérieurement.

    – Une gaine d'admission entoure les ouvertures d'admission du flux d'air secondaire.

Il est décrit ci-après, à titre d'exemple et en référence aux figures du dessin annexé, un échangeur vertical selon l'invention et la circulation des fluides dans celui-ci.

    La figure 1 représente une partie de l'échangeur en coupe verticale axiale.

La figure 2 est une coupe horizontale de l'échangeur au niveau A de la figure 1 pour la moitié supérieure et au niveau B de cette figure 1 pour la moitié inférieure.

La figure 3 est une coupe horizontale de l'échangeur au niveau C de la figure 1 de l'échangeur pour la moitié inférieure et au niveau D de cette figure 1 pour la moitié supérieure.

La figure 4 est une coupe verticale axiale du détail IV de la figure 1.

La figure 5 est une coupe horizontale selon l'axe V-V de la figure 4.

La figure 6 est une coupe verticale axiale du détail VI de la figure 1.

La circulation des fumées dans l'échangeur est la suivante. Les fumées pénètrent dans le haut de l'échangeur par la gaine 10 munie d'une couche de calorifuge 10A. Elles circulent de haut en bas dans les tubes des différents faisceaux 3 proches de l'axe et 4 périphériques. Les plaques tubulaires inférieures de ces faisceaux sont reliées à la plaque inférieure 8 de l'échangeur par des tôles ondulées périphériques 16A d'un genre connu, permettant de compenser les différences de dilatation thermiques radiales (tendance à la dilatation "en trapèze"). Les plaques tubulaires supérieures sont reliées à la plaque supérieure 8A de l'échangeur par des soufflets de dilatation 16, permettant la dilatation longitudinale des faisceaux, et des tôles ondulées périphériques 16B, assurant la compensation des différences de dilatations radiales.

Les fumées refroidies sont évacuées par la gaine inférieure 11, munie d'un calorifugeage interne 12.

Le poids de chaque faisceau est reporté par des colonnes 15 sur une structure externe 15A, disposée à la base de l'appareil, chaque faisceau tubulaire possédant son dispositif de supportage indépendant.

La circulation de l'air dit "primaire" est la suivante.

L'air froid pénètre par la tubulure inférieure 2 dans la zone axiale du bas de l'échangeur. Une chicane horizontale 5 l'oblige à traverser radialement les faisceaux tels que 3 de la zone axiale, contenus dans des conduits 13 munis d'un calorifugeage interne 18, vers la périphérie de cette zone.

Puis une autre chicane 6 l'oblige à traverser à nouveau les faisceaux tubulaires 3 vers l'axe de l'échangeur et une chicane 7 le ramène vers la périphérie de la zone axiale.

Il revient enfin au-dessous de la plaque supérieure 8A de l'échangeur vers l'axe de celui-ci pour être évacué par la tubulure axiale supérieure 7A.

La circulation de l'air dit "secondaire" s'effectue comme suit.

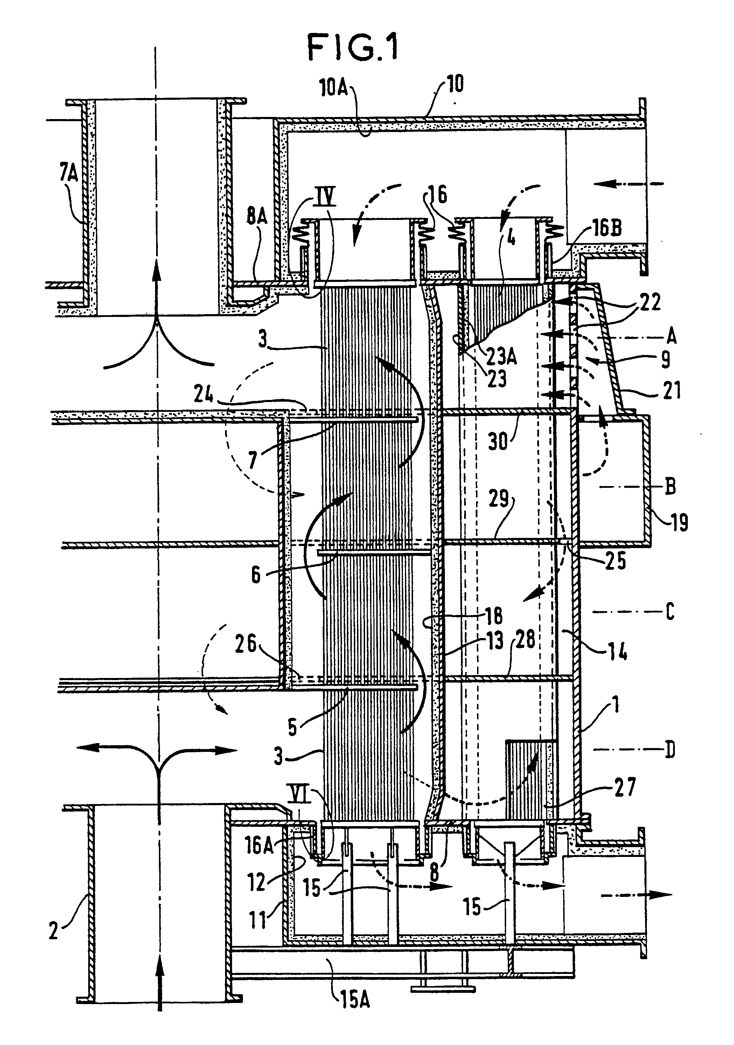

Au niveau A de la figure 1, l'air pénètre dans une gaine annulaire 19 par une tubulure 20. Il est distribué sur le pourtour de l'échangeur par des répartiteurs 21 et traverse la virole par des ouvertures 22 pratiquées en face des conduits des faisceaux tubulaires 4 de la zone externe. Il est canalisé vers l'axe de l'échangeur en passant entre les conduits 23 et 13 contenant les faisceaux, qu'il refroidit à son passage. Il descend au niveau inférieur B par des ouvertures 24 pratiquées dans la zone centrale de la chicane horizontale supérieure 30.

Au niveau B, l'air circule du centre vers la périphérie, en se dirigeant vers des ouvertures 25 pratiquées dans la zone externe de la chicane horizontale médiane 29, pour descendre au niveau inférieur C.

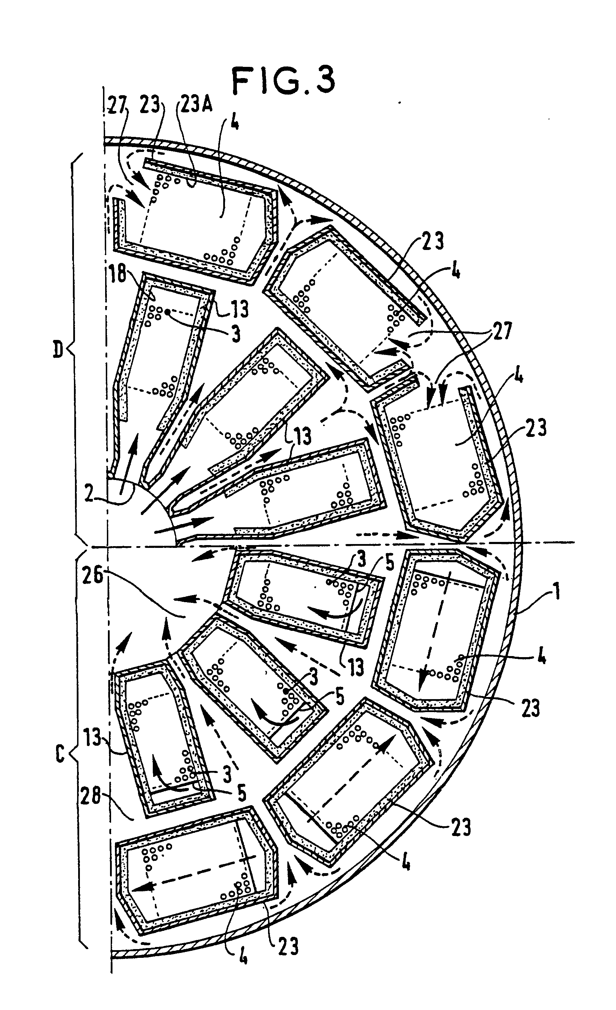

Au niveau C, l'air est de nouveau canalisé vers l'axe de l'appareil (voir fig. 3). Il traverse l'ouverture 26 pratiquée dans la chicane horizontale inférieure 28 pour descendre au niveau D.

Au niveau D, l'air se dirige de l'axe sur la périphérie, où il pénètre dans des ouvertures 27 d'entrée dans les conduits 23 à calorifugeage interne 23A contenant les faisceaux tubulaires de la zone externe.

L'air secondaire s'élève ensuite d'un niveau à l'autre en traversant à quatre reprises les faisceaux 4 de la zone extérieure contenus dans les conduits 23.

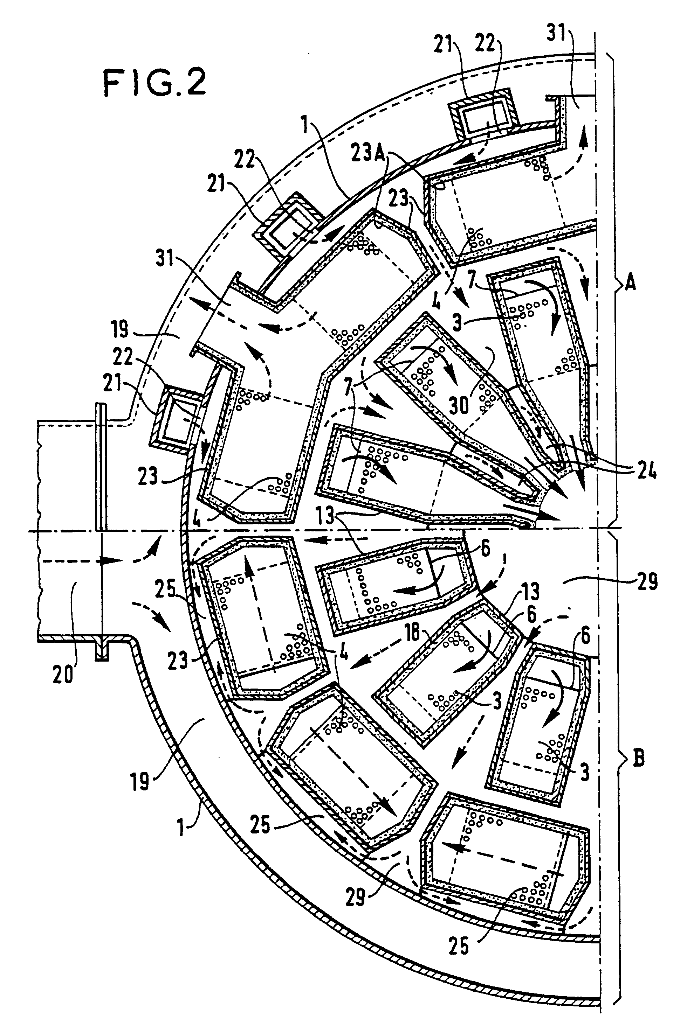

Parvenu au niveau supérieur A, l'air secondaire est collecté par groupe de deux conduits adjacents et évacué par des tubulures de sortie telles que 31 (fig. 2).

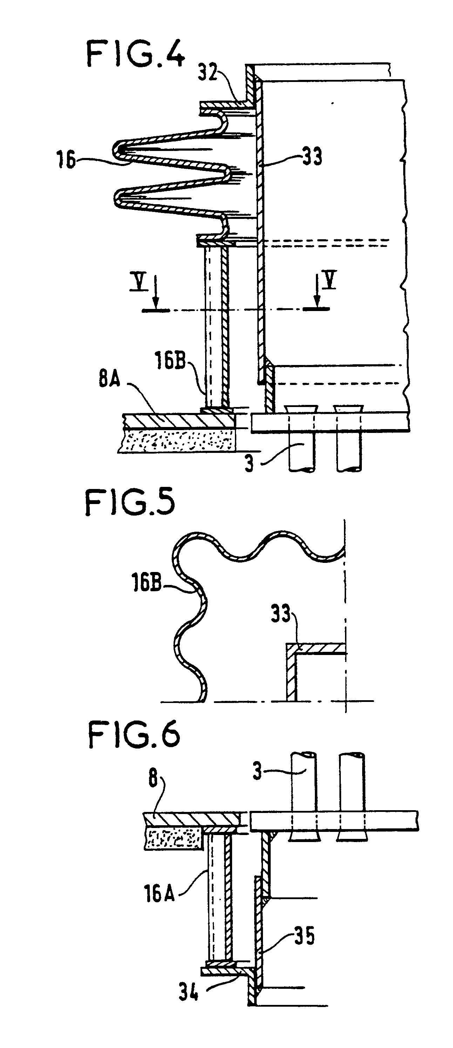

Les plaques tubulaires supérieures de ces faisceaux sont reliées à la plaque supérieure 8A de l'échangeur par des soufflets de dilatation 16, permettant la dilatation longitudinale des faisceaux, et des tôles ondulées périphériques 16B, assurant la compensation des différences de dilatation thermique radiale (tendance à la dilatation "en trapèze"). Ces soufflets et ces tôles ondulées périphériques sont représentés à plus grande échelle dans les figures 4 et 5.

En figure 4, le soufflet 16 est relié par son extrémité supérieure à un rebord 32, entourant l'extrémité supérieure du conduit 33 d'admission des fumées dans un faisceau tubulaire. Il est relié par son extrémité inférieure à la tôle ondulée 16B, elle-même fixée par son extrémité inférieure à la plaque supérieure 8A de l'échangeur.

La coupe horizontale de la figure 5 montre comment la tôle ondulée 16B est disposée autour de la partie inférieure du conduit 33.

Les plaques tubulaires inférieures des faisceaux sont reliées à la plaque inférieure 8 de l'échangeur par des tôles ondulées périphériques 16A, assurant également la compensation des différences de dilatation thermique radiale. Celles-ci sont représentées plus en détail en figure 6.

Les tôles ondulées sont fixées par leur extrémité supérieure à la plaque inférieure 8 de l'échangeur, et par leur extrémité inférieure à un rebord 34 entourant le conduit 35 d'évacuation des fumées au bas du faisceau tubulaire.

## Revendications

1. Echangeur à virole cylindrique verticale (1) pour le réchauffage d'air sous pression en contre-courant de fumées circulant dans des faisceaux tubulaires verticaux, répartis régulièrement entre au moins une couronne centrale (3) et au moins une couronne périphérique (4), comprenant

a) une tubulure (2) d'admission d'un flux d'air primaire à l'extrémité inférieure de l'échangeur dans sa zone axiale, des chicanes (5, 6, 7) contraignant le flux d'air primaire à circuler radialement alternativement de façon centrifuge et de façon centripète sensiblement perpendiculairement aux faisceaux tubulaires de la couronne axiale, et une tubulure (7A) d'évacuation d'un flux d'air primaire réchauffé dans la zone axiale de l'extrémité supérieure de l'échangeur,

b) des plaques de fond inférieure (8) et supérieure (8A) fixées à la virole,

c) au moins une ouverture (9) d'admission d'un flux d'air secondaire dans la zone périphérique de l'échangeur, des chicanes (28, 29, 30) contraignant le flux d'air secondaire à circuler radialement alternativement de façon centrifuge et de façon centripète sensiblement perpendiculairement aux faisceaux tubulaires de la couronne périphérique (4), et au moins une ouverture (31) d'évacuation du flux d'air secondaire réchauffé dans la zone périphérique de l'échangeur,

d) une gaine (10) d'admission de fumée chaude dans le haut des faisceaux tubulaires, et une gaine (11) d'évacuation de fumée refroidie du bas des faisceaux tubulaires, caractérisé en ce que

e) les faisceaux tubulaires de la couronne centrale (3) et de la couronne périphérique (4) sont contenus dans des conduits calorifugés internes (13) et externes (23) fixés aux plaques de fond inférieure (8) et supérieure (8A),

f) en ce que des ouvertures (9) d'admission du flux d'air secondaire dans l'échangeur sont disposées dans la partie supérieure de celui-ci et des ouvertures (31) d'évacuation de ce flux de l'échangeur dans cette partie supérieure, entre les ouvertures d'admission, au même niveau, et des ouvertures (27) d'admission de ce flux dans les conduits externes (23) dans leur extrémité inférieure,

g) en ce que les conduits calorifugés externes (23) contenant les faisceaux tubulaires de la couronne périphérique la plus externe (4) sont séparés de la virole (1) par une zone libre (14) en communication avec l'ouverture (9) d'admission du flux d'air secondaire,

h) en ce que l'ensemble de l'échangeur est supporté par une structure fixe (15A) disposée sous son fond inférieur,

et i) en ce que les faisceaux tubulaires sont fixés à la plaque de fond inférieure (8) de l'échangeur et reliés à sa plaque de fond supérieure (8A) par des joints de dilatation (16).

2. Echangeur selon la revendication 1, caractérisé en ce que ses faisceaux tubulaires (3, 4) sont de section droite rectangulaire, et en ce que ceux formant la couronne périphérique (4) ont leur petit côté orienté radialement.

3. Echangeur selon les revendications 1 ou 2, caractérisé en ce que sa virole cylindrique (1) n'est pas calorifugée.

4. Echangeur selon l'une des revendications 1 à 3, caractérisé en ce que des tôles ondulées (16A, 16B) sont disposées autour des faisceaux tubulaires et reliées à une extrémité aux joints de dilatation (16) de ces faisceaux et à l'autre extrémité au fond inférieur de l'échangeur, de manière à permettre la dilatation radiale différentielle des faisceaux.

5. Echangeur selon l'une des revendications 1 à 4, caractérisé en ce que chaque faisceau tubulaire est muni de supports indépendants (15).

6. Echangeur selon l'une des revendications 1 à 5, caractérisé en ce que le calorifugeage (18, 23A) des conduits (13, 23) entourant les faisceaux tubulaires est interne.

7. Echangeur selon l'une des revendications 1 à 6, caractérisé en ce que la gaine d'admission des fumées (10) est calorifugée intérieurement (10A).

8. Echangeur selon l'une des revendications 1 à 7, caractérisé en ce que la gaine d'évacuation des fumées (11) est calorifugée intérieurement (12).

9. Echangeur selon l'une des revendications 1 à 8, caractérisé en ce qu'une gaine d'admission (19) entoure les ouvertures (9) d'admission du flux d'air secondaire.

## Ansprüche

1. Wärmetauscher mit einem senkrechten zylindrischem Mantel (1) zum Erwärmen von unter Druck stehender Luft durch Rauchgase im Gegenstrom, wobei die Rauchgase durch senkrechte Rohrbündel strömen, die regelmäßig über mindestens eine zentrale Ringzone (3) und über mindestens eine periphere Ringzone (4) verteilt sind, und wobei der Wärmetauscher folgende Komponenten aufweist:

a) einen Einlaßstutzen (2) am unteren Ende des Wärmetauschers, durch den ein Primärluftstrom in die zentrale Wärmetauscherzone geführt wird, wobei Hindernisse (5, 6, 7) den Primärluftstrom zwingen, in radialer, im wesentlichen senkrecht zu den Rohrbündeln der zentralen Ringzone verlaufender Richtung abwechselnd von innen nach außen und von außen nach innen zu strömen, und einen Auslaßstutzen (7A) am oberen Ende des Wärmetauschers, durch den ein in der axialen Zone erwärmter Primärluftstrom abgeführt wird,

b) untere (8) und obere Bodenplatten (8A), die am Mantel befestigt sind,

c) mindestens eine Einlaßöffnung (9), durch die ein Sekundärluftstrom in die periphere Zone des Wärmetauschers gelangt, wobei Hindernisse (28, 29, 30) den Sekundärluftstrom zwingen, in radialer Richtung abwechselnd von innen nach außen und von außen nach innen im wesentlichen senkrecht zu den Rohrbündeln der peripheren Ringzone (4) zu strömen, und mindestens eine Auslaßöffnung (31) in der peripheren Zone des Wärmetauschers für den erwärmten Sekundärluftstrom,

d) einen Einlaßkanal (10) für heiße Rauchgase in das obere Ende der Rohrbündel, und einen Auslaßkanal (11) zum Abführen der abgekühlten Rauchgase am unteren Ende des Rohrbündels, dadurch gekennzeichnet,

e) daß die Rohrbündel der zentralen Ringzone (3) und der peripheren Ringzone (4) in inneren (13) und äußeren wärmeisolierten Kanälen (23) enthalten sind, die an der unteren (8) und der oberen Bodenplatte (8A) befestigt sind,

f) daß die Einlaßöffnungen (9) für den Sekundärluftstrom in den Wärmetauscher im oberen Teil desselben, und Auslaßöffnungen (31) für diesen Strom aus dem Wärmetauscher in diesem oberen Teil auf gleicher Höhe zwischen den Einlaßöffnungen liegen, während Einlaßöffnungen (27) für diesen Strom in die äußeren Kanäle (23) an deren unterem Ende angeordnet sind,

g) daß die äußeren wärmeisolierten Kanäle (23), welche die Rohrbündel der äußersten peripheren Ringzone (4) enthalten, vom Mantel (1) durch eine freie Zone (14) getrennt sind, die mit der Einlaßöffnung (9) des Sekundärluftstroms in Verbindung steht,

h) daß der gesamte Wärmetauscher von einer feststehenden Struktur (15A) unter seinem unteren Boden getragen wird,

i) und daß seine Rohrbündel an der unteren Bodenplatte (8) des Wärmetauschers befestigt und über Dehnungsdichtungen (16) mit seiner oberen Bodenplatte (8A) verbunden sind.

2. Wärmetauscher nach Anspruch 1, dadurch gekennzeichnet, daß seine Rohrbündel (3, 4) einen rechteckigen Querschnitt besitzen, und daß die kurze Seite der die periphere Ringzone (4) bildenden Bündel in radialer Richtung liegt.

3. Wärmetauscher nach den Ansprüchen 1 oder 2, dadurch gekennzeichnet, daß sein zylindrischer Mantel (1) keine Wärmeisolation besitzt.

4. Wärmetauscher nach einem der Ansprüche 1 bis 3, dadurch gekennzeichnet, daß gewellte Bleche (16A, 16B) um die Rohrbündel herum angeordnet und an einem Ende mit den Dehnungsdichtungen (16) dieser Bündel und am anderen Ende mit dem unteren Boden des Wärmetauschers verbunden sind, derart, daß die unterschiedliche radiale Ausdehnung der Bündel stattfinden kann.

5. Wärmetauscher nach einem beliebigen der Ansprüche 1 bis 4, dadurch gekennzeichnet, daß jedes Rohrbündel mit getrennten Stützen (15) versehen ist.

6. Wärmetauscher nach einem beliebigen der Ansprüche 1 bis 5, dadurch gekennzeichnet, daß sich die Wärmeisolierung (18, 23A) der die Rohrbündel umgebenden Kanäle (13, 23) im Kanalinneren befindet.

7. Wärmetauscher nach einem beliebigen der Ansprüche 1 bis 6, dadurch gekennzeichnet, daß der Rauchgaseinlaßkanal (10) innen wärmeisoliert ist (10A).

8. Wärmetauscher nach einem beliebigen der Ansprüche 1 bis 7, dadurch gekennzeichnet, daß der Rauchgasabführkanal (11) innen wärmeisoliert ist (12).

9. Wärmetauscher nach einem beliebigen der Ansprüche 1 bis 8, dadurch gekennzeichnet, daß ein Einlaßkanal (19) die Einlaßöffnungen (9) für den Sekundärluftstrom umgibt.

## Claims

1. A heat exchanger having a cylindrical shell (1) for reheating air under pressure flowing in countercurrent to the flue gases circulating through vertical tube bundles, which are regularly distributed among at least one central ring (6) and at least one peripheral ring (4), comprising :

a) an inlet pipe (2) at the lower end of the exchanger for feeding a primary air flow into its axial region, whereby baffles (5, 6, 7) constrain the primary air flow to circulate radially and alternately in a centrifugal and a centripetal direction, substantially at right angles to the tube bundle of the axial ring, and an outlet pipe (7A) at the upper end of the exchanger for evacuating a primary air flow which has been reheated in the axial region of the exchanger,

b) lower (8) and upper plates (8A) fixed to the shell,

c) at least one inlet opening (9) for feeding a secondary air flow into the peripheral region of the exchanger, whereby baffles (28, 29, 30) constrain the secondary air flow to circulate radially and alternately in a centrifugal and a centripetal direction, substantially at right angles to the tube bundles of the peripheral ring (4), and at least one outlet opening (31) for evacuating the secondary air flow which has been reheated in the peripheral region of the exchanger,

d) an inlet duct (10) for feeding the hot flue gases to the upper ends of the tube bundles, and an outlet duct (11) for evacuating the cold flue gases from the lower ends of the tube bundles, characterized in

e) that the tube bundles of the central ring (3) and of the peripheral ring (4) are contained in thermally insulated internal (13) and external ducts (23) fixed to the lower (8) and upper bottom plates (8A),

f) that the inlet openings (9) for feeding the secondary air flow into the exchanger are provided in the upper portion of the latter and outlet openings (31) for evacuating said flow from the exchanger are provided in said upper portion between the inlet openings at the same level, and inlet openings (27) for feeding said flow into the outer ducts (23) are provided at their lower end,

g) that the thermally insulated outer ducts (23) containing the bundles of the outermost peripheral ring (4) are separated from the shell (1) by an open space (14) communicating with the secondary air flow inlet opening (9),

h) that the exchanger as a whole is supported by a stationary structure (15A) disposed beneath its lower bottom, and

i) that the tube bundles are fixed to the lower bottom plate (8) of the exchanger and connected to its upper bottom plate (8A) by expansion joints (16).

2. A heat exchanger according to claim 1, characterized in that the tube bundles (3, 4) are rectangular in cross-section and that those of them forming the peripheral ring (4) have their small sides directed radially.

3. A heat exchanger according to claim 1 or 2, characterized in that the cylindrical shell (1) has no heat insulation.

4. A heat exchanger according to any one of claims 1 to 3, characterized in that corrugated metal sheets (16A, 16B) are disposed around the tube bundles and connected by one end thereof to the expansion joints (16) of said bundles, and by their other end to the lower bottom of the exchanger, so as to allow differential thermal expansion of the bundles to occur.

5. A heat exchanger according to any one of claims 1 to 4, characterized in that each tube bundle is provided with independent supports (15).

6. A heat exchanger according to one of claims 1 to 5, characterized in that the heat insulation (18, 23A) of the ducts (31, 23) surrounding the tube bundles is an internal insulation.

7. A heat exchanger according to one of claims 1 to 6, characterized in that the flue gas inlet duct (10) is thermally insulated at its inner side (10A).

8. A heat exchanger according to one of claims 1 to 7, characterized in that the flue gas evacuation duct (11) is thermally insulated at its inner side (12).

9. A heat exchanger according to one of claims 1 to 8, characterized in that an inlet duct (19) surrounds the openings (9) for feeding the secondary air flow.

# FIG.1

# FIG.2

# FIG.3

# FIG.4

# FIG.5

# FIG.6